(19) Europäisches Patentamt
European Patent Office
Office européen des brevets

(11) **EP 3 969 741 B1**

(12) **EUROPÄISCHE PATENTSCHRIFT**

(45) Veröffentlichungstag und Bekanntmachung des Hinweises auf die Patenterteilung:
**12.07.2023   Patentblatt 2023/28**

(21) Anmeldenummer: **20727205.5**

(22) Anmeldetag: **15.05.2020**

(51) Internationale Patentklassifikation (IPC):
**F03D 1/06** (2006.01)

(52) Gemeinsame Patentklassifikation (CPC):
**F03D 1/0641;** F05B 2230/50; F05B 2240/305;
Y02E 10/72; Y02P 70/50

(86) Internationale Anmeldenummer:
**PCT/EP2020/063679**

(87) Internationale Veröffentlichungsnummer:
**WO 2020/234176 (26.11.2020 Gazette 2020/48)**

(54) **ROTORBLATT UND WINDENERGIEANLAGE**

ROTOR BLADE AND WIND TURBINE

PALE DE ROTOR ET ÉOLIENNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.05.2019   DE 102019113080**

(43) Veröffentlichungstag der Anmeldung:
**23.03.2022   Patentblatt 2022/12**

(73) Patentinhaber: **Wobben Properties GmbH**
**26607 Aurich (DE)**

(72) Erfinder:
• **MESSING, Ralf**
**26605 Aurich (DE)**

• **STEMBERG, Jochen**
**26607 Aurich (DE)**
• **MAAß, Hauke**
**8000 AARHUS (DK)**

(74) Vertreter: **Eisenführ Speiser**
**Patentanwälte Rechtsanwälte PartGmbB**
**Postfach 31 02 60**
**80102 München (DE)**

(56) Entgegenhaltungen:
EP-A1- 2 366 891          WO-A1-2016/055076
US-A1- 2015 176 563     US-A1- 2019 032 631

**Beschreibung**

Die Erfindung betrifft ein Rotorblatt einer Windenergieanlage, eine zugehörige Windenergieanlage und ein zugehöriges Verfahren.

Anbauteile an Rotorblättern von Windenergieanlagen zur Erhöhung der aerodynamischen Effizienz sind bekannt. Unter Anderem sind Wirbelgeneratoren, auch als Vortex-Generatoren bezeichnet, bekannt, die oftmals im nabennahen Bereich bevorzugt auf der Saugseite des Rotorblattes angebracht werden und für eine Durchmischung der Grenzschichtströmung sorgen, wodurch die Strömung auf einer längeren Laufstrecke auf der Rotorblattoberfläche anliegend bleibt, bevor eine Strömungsablösung auftritt.

Die verzögerte Strömungsablösung ermöglicht eine Realisierung höherer Anstellwinkel und damit einhergehend höherer maximaler Auftriebsbeiwerte am Profilschnitt.

Neben den Wirbelgeneratoren sind auch andere aerodynamische Anbauteile bekannt. Beispielsweise kommen aerodynamische Klappen oder auch sogenannte Spoiler, die in der Fachliteratur auch als Gurney Flaps bezeichnet werden, zum Einsatz.

Die Gurney Flaps werden dabei vorzugsweise im nabennahen Bereich des Rotorblattes auf der Druckseite im Bereich der Hinterkante, d.h. an zylindrischen oder elliptischen Profilen im Bereich kurz vor der Strömungsablösung, angebracht.

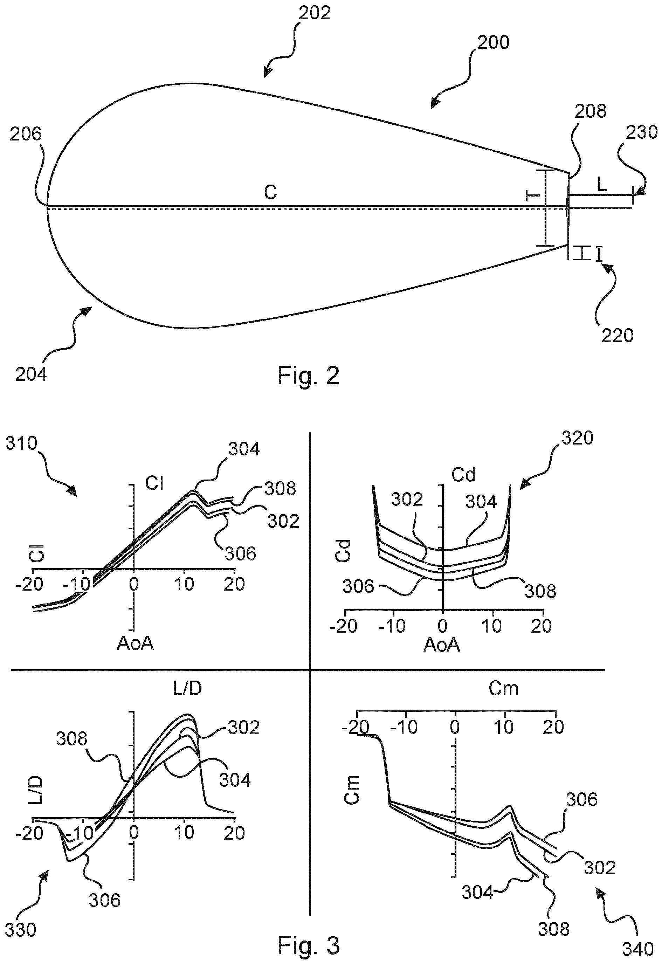

Fig. 2 zeigt schematisch und exemplarisch einen Profilschnitt 200 durch ein Rotorblatt einer Windenergieanlage. Eine Saugseite 202 liegt einer Druckseite 204 gegenüber und verbindet eine Vorderkante 206 mit einer Hinterkante 208. Zwischen Vorderkante 206 und einer Mitte der Hinterkante 208 erstreckt sich eine Profilsehne mit einer Rotorblatttiefe C. In diesem Beispiel handelt es sich um ein Profil mit dicker Hinterkante 208, die eine Dicke T aufweist. Die Dicke T ist senkrecht zu der Rotorblatttiefe C definiert. Auch geneigte dicke Hinterkanten 208 sind vorstellbar, wobei zur Vergleichbarkeit eine Projektion auf die Senkrechte zur Rotorblatttiefe C erfolgt. An der bzw. im Bereich der Hinterkante 208 ist sowohl eine Gurney Flap 220 als auch eine Splitterplatte 230 angebracht. Die Gurney Flap 220 ist beispielsweise in Form eines Blechwinkels ausgeführt und in diesem Beispiel rechtwinklig zur Rotorblatttiefe C. Die Höhe H der Gurney Flap 220 bezeichnet die Erstreckung der Gurney Flap 220 senkrecht zu der Rotorblatttiefe C von der Hinterkante 208 ab. Eine Länge L der Splitterplatte 230 bezeichnet eine Dimension der Splitterplatte 230 parallel zu der Rotorblatttiefe C über die Hinterkante 208 hinaus.

Fig. 2 zeigt demnach ein schematisches Rotorblattprofil mit flacher oder stumpfer Hinterkante 208, das auch als Flatbackprofil bezeichnet ist.

Mit Hilfe einer Gurney Flap lässt sich grundsätzlich die Wölbung eines Profils an der Hinterkante deutlich erhöhen, was zu einer signifikanten Auftriebssteigerung führen kann. Nachteilig erhöht sich jedoch auch das aerodynamische Moment $c_m$ und vor allem auch der Widerstandsbeiwert $c_d$. Gurney Flaps sind also dort sinnvoll einzusetzen, wo ein hoher Auftrieb nötig ist, ein geringer Widerstandsbeiwert aber nicht zwingend erforderlich ist. Dies ist bei Windkraftanlagen vornehmlich im Bereich der Rotorblattwurzel der Fall. In diesem Bereich kommen auch Profile mit flacher Hinterkante zum Einsatz.

Die Splitterplatte 230, die beispielsweise in Fig. 2 gezeigt ist, wird zur Reduzierung des Widerstandes etwa senkrecht zur Hinterkante 208, das heißt insbesondere in Sehnenrichtung angebracht. Dieses Bauteil wird als Splitterplatte bezeichnet, da sie den Nachlaufbereich der Hinterkante 208 in zwei Teile aufteilen. Die Verwendung der Splitterplatte 230 verhindert die Bildung einer energiereichen periodischen Wirbelstraße hinter Profilen mit flacher Hinterkante 208.

Der Vorgang der instationären Wirbelablösung in der sogenannten Kármánschen Wirbelstraße entzieht der Profilumströmung Energie und verursacht einen hohen Strömungswiderstand. An der Profilhinterkante liegt gegenüber dem Umgebungsduck oftmals ein Unterdruck an, der dazu führt, dass die resultierende Kraft auf die Profilhinterkante entgegen der Bewegungsrichtung des Profils zeigt. Ziel ist es, durch gezieltes Unterbrechen der Wirbelinteraktion an der flachen Hinterkante 208, die instationären Wirbel durch zwei oder mehrere stationäre Wirbel zu ersetzen, die der Profilumströmung deutlich weniger Energie entziehen. Bei geeigneter Auslegung kann durch diese Maßnahme der Widerstand von Flatbackprofilen signifikant gesenkt werden. Nachteil dieser Lösung ist, dass bedingt durch den entwölbenden Effekt der Splitterplatte 230 geringfügige Auftriebseinbußen in Kauf genommen werden müssen.

Zusammenfassend kann hinsichtlich der Verwendung von Anbauteilen zur passiven Strömungskontrolle an Flatbackprofilen Folgendes festgehalten werden. Die bereits häufig an Windkraftanlagen verwendeten Gurney Flaps steigern den Auftriebsbeiwert, erhöhen jedoch ebenfalls den Widerstandsbeiwert am Profilschnitt, wodurch in Summe die Gleitzahl reduziert wird. Die bisher überwiegend aus der Forschung bekannten Splitterplatten hingegen reduzieren den Druckwiderstand an der flachen Hinterkante und damit den Widerstandbeiwert bei jedoch reduzierten Auftriebsbeiwerten, wodurch in Summe der gewünschte Gleitzahlanstieg abgeschwächt wird.

Jedes Anbauteil kann durch die beschriebenen Eigenschaften in isolierter Anwendung nicht in optimaler Weise den Anlagenertrag steigern. Nur eine Auftriebserhöhung bei gleichzeitiger Widerstandsreduzierung wäre in optimaler Weise vorteilhaft im Sinne der Leistungssteigerung für das Rotorblatt.

Das Deutsche Patent- und Markenamt hat in der Prioritätsanmeldung zu vorliegender Anmeldung folgenden Stand der Technik recherchiert: DE 10 2011 012 965 A1, DE 10 2018 103 678 A1, DE 20 2016 101 461 U1, US 2010/0 047 070 A1, US 2019/0 024 631 A1, US 5 265 830 A, EP 2 806 156 A1, WO 2016/055 076 A1.

US 2019/032631 A1 beschreibt ein Rotorblatt mit einer Saugseite und einer Druckseite für eine Windkraftanlage, umfassend: eine Rotorblattwurzel eines Nabenbereichs zur Befestigung des Rotorblatts an einer Rotornabe und eine Rotorblattspitze, die zu der Seite eines Spitzenbereichs angeordnet ist, der von der Rotorblattwurzel abgewandt ist. In dem Nabenbereich hat das Rotorblatt zumindest teilweise ein Dickenprofil, das an seiner Hinterkante eine dornartige Verlängerung aufweist, wobei das Dickenprofil zumindest teilweise eine erste dornartige Verlängerung an der saugseitigen Hinterkante und eine zweite dornartige Verlängerung an der druckseitigen Hinterkante aufweist, und im Nabenbereich das Dickenprofil zumindest teilweise einen Strömungsstabilisator und/oder einen Wirbelerzeuger auf der Saug- und/oder Druckseite aufweist.

US 2015/176563 A1 beschreibt ein aerodynamisches Element, welches einen Querschnitt in Luftstromrichtung mit einer Hinterkante hat. Das aerodynamische Element hat einen nicht-symmetrischen, schwalbenschwanzförmigen Hohlraumkörper, der an der Hinterkante des aerodynamischen Elements angebracht ist. Das aerodynamische Element wird z.B. in einem Rotorblatt für eine Windkraftanlage eingesetzt.

EP 2 366 891 A1 offenbart ein Windenergieanlagenrotorblatt mit einer Blattspitze, einer Blattwurzel, einer Vorderkante, einer Hinterkante, einer Druckseite, einer Saugseite und einem Querschnitt, der sich von der Blattspitze zur Blattwurzel hin ändert, wobei der Querschnitt in der Mitte des Rotorblatts von einem aerodynamischen Profil gebildet und an der Blattwurzel im Wesentlichen kreisförmig ist und der Querschnitt in einem Längsabschnitt des Rotorblatts, der zwischen der Blattwurzel und der Mitte des Rotorblatts angeordnet ist, Folgendes aufweist: einen konvexen Druckseitenabschnitt, der sich von der Vorderkante bis zu einem druckseitigen Wendepunkt erstreckt; einen konkaven Druckseitenergänzungsabschnitt, der sich an den druckseitigen Wendepunkt mit stetiger Krümmung anschließt und sich bis zur Hinterkante erstreckt; einen konvexen Saugseitenabschnitt, der sich von der Vorderkante bis zu einem saugseitigen Knick- oder Wendepunkt erstreckt, und einen Saugseitenergänzungsabschnitt, der sich von dem saugseitigen Knick- oder Wendepunkt bis zur Hinterkante erstreckt.

Vor diesem Hintergrund war es eine Aufgabe der vorliegenden Erfindung, ein Rotorblatt mit verbesserten Eigenschaften anzugeben. Insbesondere war es eine Aufgabe, ein Rotorblatt durch eine Kombination von Gurney Flap und Splitterplatte zu optimieren.

Erfindungsgemäß wird die Aufgabe durch den Gegenstand der unabhängigen Patentansprüche gelöst. Besondere Ausgestaltungen sind in den abhängigen Ansprüchen definiert.

Erfindungsgemäß wird die Aufgabe durch ein Rotorblatt einer Windenergieanlage mit einer Rotorblattlänge, einer über die Rotorblattlänge verlaufende Rotorblatttiefe, einer über die Rotorblattlänge verlaufende Rotorblattdicke und einer über die Rotorblattlänge verlaufende Dicke einer Hinterkante des Rotorblattes gelöst. Das Rotorblatt weist in einem Bereich der Rotorblattlänge gleichzeitig eine Splitterplatte mit einer vorbestimmten Länge und eine Gurney Flap mit einer vorbestimmten Höhe auf. Ein Verhältnis aus Höhe der Gurney Flap zu Länge der Splitterplatte an einer bestimmten Position in Richtung der Rotorblattlänge ist derart gewählt, dass ein mit einer abnehmenden relativen Profildicke, die als Verhältnis von Rotorblattdicke zu Rotorblatttiefe definiert ist, abnehmender Schwellwert unterschritten wird.

Es ist demnach eine besondere Erkenntnis der vorliegenden Erfindung, dass die relative Profildicke eines Rotorblattprofiles einen Schwellwert definiert, der wiederum ein Verhältnis der Länge der Splitterplatte und der Höhe der Gurney Flap beeinflusst. Je höher die relative Profildicke, desto höher ist der Schwellwert des Verhältnisses der Höhe der Gurney Flap und der Länge der Splitterplatte. Anders ausgedrückt, je höher die relative Profildicke, desto höher die Gurney Flap im Verhältnis zur Länge der Splitterplatte.

Die Erfinder der vorliegenden Erfindung haben besonders herausgefunden, dass insbesondere zu hohe Gurney Flaps negativ auf die Leistung des Rotorblattes wirken, wobei diese Wirkung durch längere Splitter Plates, höhere relative Profildicken, etc., kompensiert werden kann. Es ist somit eine besondere Erkenntnis, dass der Schwellwert, der mit dem Verhältnis aus Höhe der Gurney Flap und Länge der Splitterplatte verglichen wird, abhängig ist von der relativen Profildicke und mit selbiger abnimmt.

Vorzugsweise ist die Höhe der Gurney Flap hierbei in jedem Fall geringer als die Länge der Splitterplatte.

Vorzugsweise ist eine Maßzahl $\varepsilon$ als Verhältnis einer entdimensionalisierten Höhe der Gurney Flap und einer entdimensionalisierten Länge der Splitterplatte bestimmt, wobei die Höhe der Gurney Flap und die Länge der Splitterplatte der bestimmten Position in Richtung der Rotorblattlänge derart gewählt ist, dass ein mit einer abnehmenden relativen Profildicke, die als Verhältnis von Rotorblattdicke zu Rotorblatttiefe definiert ist, abnehmender Schwellwert unterschritten wird.

Die Maßzahl $\varepsilon$ ermöglicht eine im Wesentlichen profilunabhängige Bewertung, da sowohl die Höhe der Gurney Flap als auch die Länge der Splitterplatte entdimensionalisiert und damit unabhängig von der konkreten Ausgestaltung des Rotorblattes ist. Die Maßzahl $\varepsilon$ ermöglicht demnach eine Vergleichbarkeit und eine allgemeingültige Bewertung, um die Länge der Splitterplatte bzw. die Höhe der Gurney Flap festzulegen.

An der bestimmten Position in Richtung der Rotorblattlänge bedeutet, dass ein bestimmter Profilschnitt des Rotorblattes zur Bewertung herangezogen wird. Sowohl die Splitterplatte als auch die Gurney Flap haben eine gewisse Erstreckung in Längsrichtung. Die Bewertung des Verhältnisses erfolgt an einer bestimmten Position, das heißt mit Bezug auf einen bestimmten Profilschnitt.

Besonders bevorzugt wird, dass das Verhältnis über eine vorbestimmte Länge in Richtung der Rotorblattlänge aufrechterhalten wird. Insbesondere ist das erfindungsgemäß bewertete Verhältnis über den gesamten Bereich, in dem sich die Splitterplatte und die Gurney Flap in Längsrichtung des Rotorblattes zusammen erstrecken, erfüllt.

Vorzugsweise ist die entdimensionalisierte Höhe der Gurney Flap ein Verhältnis aus Höhe der Gurney Flap und der Rotorblatttiefe und/oder die entdimensionalisierte Länge der Splitterplatte ein Verhältnis aus Länge der Splitterplatte und Dicke der Hinterkante.

Vorzugsweise sind die Gurney Flap und die Splitterplatte derart dimensioniert, dass die Maßzahl $\varepsilon$ über den Bereich der Gurney Flap und der Splitterplatte in Rotorblattlängsrichtung in einem Bereich zwischen 0 und einer Funktion der relativen Dicke $\varepsilon_{Grenze} = f\,(\text{relTh}(r))$ liegt:

$$0 \le \epsilon\big(\text{relTh(r)}\big) \le \epsilon_{\text{Grenze}}\big(\text{relTh(r)}\big).$$

Vorzugsweise ist die Funktion der relativen Dicke $\varepsilon_{Grenze}$ wie folgt definiert:

$$\epsilon_{\text{Grenze}} = f\big(\text{relTh(r)}\big) = \begin{cases} 0, \text{relTh} < 0.16 \\ 0.881 \cdot \text{relTh(r)} - 0.081, 0.16 \le \text{relTh(r)} \le 1.00 \\ 0, \text{relTh} > 1.00 \end{cases}.$$

Vorzugsweise liegt die Länge der Splitterplatte in einem Bereich von 25% bis 150% der Dicke der Hinterkante an der bestimmten Position in Rotorblattlängsrichtung.

Vorzugsweise beträgt die Höhe der Gurney Flap höchstens 30%, insbesondere höchstens 10%, und besonders bevorzugt höchstens 3% der Rotorblatttiefe an der bestimmten Position in Rotorblattlängsrichtung. Je näher das Profil an der bestimmten Position in Rotorblattlängsrichtung sich einem Kreiszylinder annähert, das heißt, je größer die relative Dicke wird, desto größer ist vorzugsweise die maximal verbaute Gurney Flap, bezogen auf die Rotorblatttiefe.

Vorzugsweise ist die maximale Höhe der Gurney Flap daher eine Funktion der relativen Dicke. Je geringer die relative Dicke, desto geringer ist vorzugsweise auch die Höhe der Gurney Flap, besonders bevorzugt bezogen auf die Rotorblatttiefe.

Vorzugsweise beträgt die Rotorblattdicke in dem Bereich der Gurney Flap und der Splitterplatte mindestens 16% der Rotorblatttiefe.

Die Aufgabe wird erfindungsgemäß ferner durch eine Windenergieanlage mit wenigstens einem erfindungsgemäßen Rotorblatt gelöst.

Die Aufgabe wird erfindungsgemäß ferner durch einen Windpark mit mehreren erfindungsgemäßen Windenergieanlagen gelöst.

Sowohl die erfindungsgemäße Windenergieanlage als auch der erfindungsgemäße Windpark können mit beliebigen bevorzugten Ausgestaltungen des erfindungsgemäßen Rotorblattes zum Erreichen der gleichen Vorteile kombiniert werden.

Die Aufgabe wird erfindungsgemäß ferner durch ein Verfahren zum Auslegen eines Rotorblattes einer Windenergieanlage mit einer Rotorblattlänge, einer über die Rotorblattlänge verlaufenden Rotorblatttiefe, einer über die Rotorblattlänge verlaufenden Rotorblattdicke und einer über die Rotorblattlänge verlaufenden Dicke einer Hinterkante des Rotorblattes gelöst. Das Rotorblatt weist in einem Bereich der Rotorblattlänge gleichzeitig eine Splitterplatte mit einer vorbestimmten Länge und eine Gurney Flap mit einer vorbestimmten Höhe auf. Ein Verhältnis aus Höhe der Gurney Flap zu Länge der Splitterplatte wird an einer bestimmten Position in Richtung der Rotorblattlänge derart bestimmt, dass ein mit einer relativen Profildicke, die als Verhältnis von Rotorblattdicke zu Rotorblatttiefe definiert ist, abnehmender Schwellwert unterschritten wird.

Das erfindungsgemäße Verfahren kann mit den bevorzugten Ausgestaltungen des erfindungsgemäßen Rotorblattes kombiniert werden, wobei analog die gleichen Vorteile erreicht werden.

Weitere Vorteile und bevorzugte Ausgestaltungen werden nachfolgend mit Verweis auf die beigefügten Zeichnungen beschrieben. Hierbei zeigen:

Fig. 1 schematisch und exemplarisch eine Windenergieanlage,

Fig. 2 schematisch und exemplarisch einen Profilschnitt eines Rotorblattes,

Fig. 3    schematisch und exemplarisch verschiedene Diagramme aerodynamischer Kenngrößen,

Fig. 4    schematisch und exemplarisch einen Verlauf bestimmter Größen über eine relative Dicke des Rotorblattes und

Fig. 5    schematisch und exemplarisch einen Verlauf einer erfindungsgemäßen Maß-zahl über die relative Dicke des Rotorblattes.

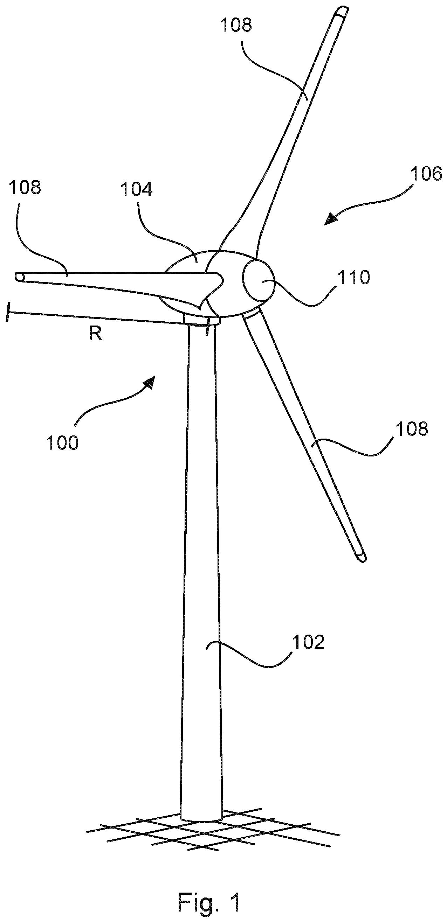

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108, die jeweils eine Rotorblattlänge R aufweisen, und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln der jeweiligen Rotorblätter 108 verändert werden.

Fig. 2 zeigt, wie bereits beschrieben, einen Profilschnitt 200 des Rotorblattes 108. Aufgrund der flachen bzw. stumpfen Hinterkante 208 ist das exemplarisch gezeigte Profil regelmäßig im Bereich der Rotorblattwurzel, das heißt in einem nabennahen Bereich des Rotorblattes 108 angesiedelt.

In dem Profilschnitt 200 ist insbesondere die Kombination zweier aerodynamischer Anbauteile gezeigt, nämlich der Gurney Flap 220 und der Splitterplatte 230. Erfindungsgemäß werden die beiden Anbauteile nun derart geschickt miteinander kombiniert und dimensioniert, dass als Ergebnis ein verbessertes Rotorblatt erhalten wird.

Fig. 3 zeigt schematisch und exemplarisch Verläufe wichtiger Kenngrößen eines Rotorblattes für ein blankes Rotorblatt, ein solches mit lediglich einer Gurney Flap 220, lediglich einer Splitterplatte 230 und einer Kombination aus Splitterplatte 230 und Gurney Flap 220, die die erfindungsgemäß festgelegte Optimierung erfüllt. Als ein blankes Rotorblatt wird insbesondere ein Rotorblatt ohne aerodynamische Anbauteile bezeichnet.

In einem ersten Diagramm 310 wird der Verlauf eines Auftriebsbeiwertes Cl auf der Vertikalen über den Profilanstellwinkel AoA in der Horizontalen aufgetragen. In einem Diagramm 320 wird ein Widerstandsbeiwert Cd ebenfalls über den Profilanstellwinkel AoA aufgetragen. Ein Diagramm 330 trägt die Gleitleistung L/D über den Profilanstellwinkel AoA auf und ein Diagramm 340 trägt den Momentenbeiwert Cm über den Profilanstellwinkel AoA auf.

In jedem der Diagramme 310, 320, 330, 340 wird der Verlauf des blanken Rotorblattes als Graph 302 gezeigt, der Verlauf mit lediglich der Gurney Flap 220 als Graph 304, der Verlauf des Rotorblattes mit lediglich der Splitterplatte 230 als Graph 306 und der Verlauf des Rotorblattes mit der erfindungsgemäß optimierten Kombination aus Splitterplatte 230 und Gurney Flap 220 wird als Graph 308 dargestellt.

Es kann gesehen werden, dass die erfindungsgemäße Kombination aus Gurney Flap 220 und Splitterplatte 230 zu einer größtmöglichen Leistungssteigerung führt. Hierbei wird die widerstandsreduzierende Wirkung der Splitterplatte 230 und gleichzeitig die auftriebserhöhende Wirkung der Gurney Flap 220 erhalten, da die Anbauteile, besonders deren Verhältnis zu dem Rotorblattprofil, optimiert sind. Damit kann die Gleitleistung L/D insbesondere von Flatbackprofilen signifikant gesteigert werden, was sich wiederum positiv auf die Anlageneffizienz auswirkt.

Vorzugsweise wird erfindungsgemäß demnach zur Dimensionierung der kombinierten Anwendung von Gurney Flap 220 und Splitterplatte 230 die Maßzahl $\varepsilon$ definiert.

$$\varepsilon = \frac{H\,T}{L\,C}$$

Hierbei gilt:

H: Höhe der Gurney Flap 220

L: Länge der Splitterplatte 230

T: Dicke der Hinterkante 208 des Flatbackprofils

C: Blatttiefe, das heißt Länge der Profilsehne, des Rotorblattes 108.

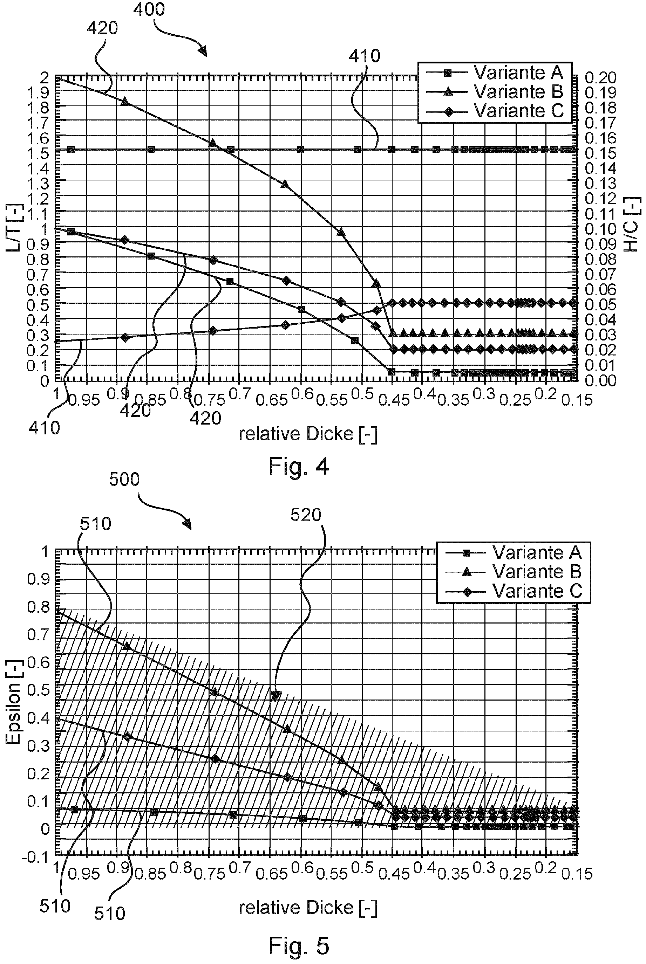

Fig. 4 zeigt schematisch und exemplarisch ein Diagramm 400, in dem für verschiedene Varianten von geeigneten Kombinationen aus Gurney Flap 220 und Splitterplatte 230 Verläufe 410 einer entdimensionierten Splitterplattenlänge L!T und Verläufe 420 einer entdimensionierten Gurney Flap-Höhe H/C in Abhängigkeit einer relativen Dicke auf der horizontalen Achse dargestellt sind.

Die in dem Diagramm 400 links gezeigte Skala der entdimensionierten Splitterplattenlänge L/T betrifft demnach die Verläufe 410, während die auf der rechten Seite gezeigte Skala der entdimensionierten Gurney Flap-Höhe H/C die Verläufe 420 betrifft. Zusammengehörende Varianten sind in den Verläufen 410, 420 mit den gleichen Symbolen, das heißt mit Rechtecken oder Rauten, dargestellt. Es kann gesehen werden, dass in einem optimierten Bereich die relativen Gurney Flap-Höhen H/C mit abnehmender relativer Dicke abnehmen und ab einem bestimmten Bereich, in dem Beispiel ab einer relativen Dicke von höchstens 0,45, konstant bleiben. Im Gegenteil hat sich herausgestellt, dass die optimierte entdimensionierte Splitterplattenlänge L/T mit sinkender relativer Dicke konstant bleibt bzw. sogar ansteigt.

Werden die Verläufe 410 und 420 miteinander in Beziehung gesetzt und hierfür die oben eingeführte Maßzahl $\varepsilon$ herangezogen, kann auf den erfindungsgemäß zu schützenden Bereich gestoßen werden, der schematisch und exemplarisch in dem Diagramm 500, das in Fig. 5 gezeigt ist, zu sehen ist.

In Fig. 5 sind Verläufe 510 für die dimensionslose Maßzahl $\varepsilon$ auf der Vertikalen für unterschiedliche relative Dicken auf der Horizontalen eingetragen. Es kann gesehen werden, dass die Verläufe sämtlicher bevorzugter Varianten von Kombinationen aus relativer Dicke, Länge L der Splitterplatte 230 und Höhe H der Gurney Flap 220 innerhalb eines vorteilhaften Maßzahlbereiches 520 liegen. Der Maßzahlbereich 520 ist durch eine obere Schranke, die mit abnehmender relativer Dicke abnimmt, insbesondere linear abnimmt, und durch eine untere Schranke, die in diesem Beispiel 0 ist, bestimmt.

$$\epsilon_{\mathrm{Grenze}} = f\big(\mathrm{relTh(r)}\big) = \begin{cases} 0, \mathrm{relTh} < 0.16 \\ 0.881 \cdot \mathrm{relTh(r)} - 0.081, 0.16 \le \mathrm{relTh(r)} \le 1.00 \\ 0, \mathrm{relTh} > 1.00 \end{cases}$$

Die relative Dicke, "relTh", ist eine Funktion einer üblicherweise relativen Position r in Rotorblattlängsrichtung R, wobei hier eine Position von 0 der Rotorblattwurzel oder in einer alternativen Definition der Rotationsachse, und eine Position von 1 der Rotorblattspitze entspricht.

Der Maßzahlbereich 520 kann vor diesem Hintergrund durch die Formel

$$0 \le \epsilon\big(\mathrm{relTh(r)}\big) \le \epsilon_{\mathrm{Grenze}}\big(\mathrm{relTh(r)}\big)$$

beschrieben werden. Solange die Maßzahl $\varepsilon$ in diesem Bereich liegt, wobei die obere Schranke abnimmt, wenn die relative Profildicke abnimmt, also üblicherweise mit zunehmendem relativen Radius r, wird im Ergebnis ein besonders attraktives Rotorblatt erhalten, das die Vorteile von der Splitterplatte 230 und der Gurney Flap 220 kombiniert. So wird erfindungsgemäß bei in Längsrichtung des Rotorblattes gleichzeitiger Anwendung der beiden Bauteile die jeweils sowohl widerstandsreduzierende Wirkung der Splitterplatte 230 als auch die auftriebserhöhende Wirkung der Gurney Flap 220 erhalten.

Anwendungsgebiet der Erfindung sind insbesondere Rotorblätter 108 für und an Windkraftanlagen 100, die über Rotorblattprofile 200 mit flacher Hinterkante 208 verfügen, sogenannte Flatbackprofile. Weiter ist die Erfindung auch an Rotorblättern 108 mit Profilen mit spitzer Hinterkante anzuwenden, an deren Hinterkante zwecks Auftriebssteigerung eine Gurney Flap angebracht wurde.

**Patentansprüche**

1. Rotorblatt (108) einer Windenergieanlage (100) mit einer Rotorblattlänge (R), einer über die Rotorblattlänge (R) verlaufende Rotorblatttiefe (C), einer über die Rotorblattlänge (R) verlaufende Rotorblattdicke (Th) und einer über die Rotorblattlänge (R) verlaufende Dicke (T) einer Hinterkante (208) des Rotorblattes,

   wobei das Rotorblatt (108) in einem Bereich der Rotorblattlänge (R) gleichzeitig eine Splitterplatte (230) mit einer vorbestimmten Länge (L) und eine Gurney Flap (220) mit einer vorbestimmten Höhe (H) aufweist, wobei ein Verhältnis aus Höhe (H) der Gurney Flap (220) zu Länge (L) der Splitterplatte (230) an einer bestimmten Position in Richtung der Rotorblattlänge (R) derart gewählt ist, dass ein mit einer abnehmenden relativen Profildicke, die als Verhältnis von Rotorblattdicke (Th) zu Rotorblatttiefe (C) definiert ist, abnehmender Schwellwert unterschritten wird.

2. Rotorblatt (108) nach Anspruch 1, wobei die Höhe (H) der Gurney Flap (220) geringer als die Länge (L) der Splitterplatte (230) ist.

3. Rotorblatt (108) nach einem der vorstehenden Ansprüche, wobei eine Maßzahl $\varepsilon$ als Verhältnis einer entdimensionalisierten Höhe (H/C) der Gurney Flap (220) und einer entdimensionalisierten Länge (L/T) der Splitterplatte (230) bestimmt ist, wobei
die Höhe (H) der Gurney Flap (220) und die Länge (L) der Splitterplatte (230) der bestimmten Position in Richtung der Rotorblattlänge (R) derart gewählt ist, dass ein mit einer abnehmenden relativen Profildicke, die als Verhältnis von Rotorblattdicke (Th) zu Rotorblatttiefe (C) definiert ist, abnehmender Schwellwert unterschritten wird.

4. Rotorblatt (108) nach Anspruch 3, wobei die entdimensionalisierte Höhe (H/C) der Gurney Flap (220) ein Verhältnis aus Höhe (H) der Gurney Flap (220) und der Rotorblatttiefe (C) ist und/oder die entdimensionalisierten Länge (L/T) der Splitterplatte (230) ein Verhältnis aus Länge (L) der Splitterplatte (230) und Dicke (T) der Hinterkante (208) ist.

5. Rotorblatt (108) nach Anspruch 3 oder 4, wobei die Gurney Flap (220) und die Splitterplatte (230) derart dimensioniert sind, dass die Maßzahl $\varepsilon$ über den Bereich der Gurney Flap (220) und der Splitterplatte (230) in Rotorblattlängsrichtung in einem Bereich zwischen 0 und einer Funktion der relativen Dicke $\varepsilon_{Grenze}$ = /(relTh(r)) liegt:

$$0 \leq \epsilon\big(\mathrm{relTh(r)}\big) \leq \epsilon_{\mathrm{Grenze}}\big(\mathrm{relTh(r)}\big).$$

6. Rotorblatt (108) nach Anspruch 5, wobei die Funktion der relativen Dicke $\varepsilon_{Grenze}$ wie folgt definiert ist:

$$\epsilon_{\mathrm{Grenze}} = f\big(\mathrm{relTh(r)}\big) = \begin{cases} 0, \mathrm{relTh} < 0.16 \\ 0.881 \cdot \mathrm{relTh(r)} - 0.081, 0.16 \leq \mathrm{relTh(r)} \leq 1.00 \\ 0, \mathrm{relTh} > 1.00 \end{cases}.$$

7. Rotorblatt (108) nach einem der vorstehenden Ansprüche, wobei die Länge (L) der Splitterplatte (230) in einem Bereich von 25% bis 150% der Dicke (T) der Hinterkante (208) an der bestimmten Position in Rotorblattlängsrichtung liegt.

8. Rotorblatt (108) nach einem der vorstehenden Ansprüche, wobei die Höhe (H) der Gurney Flap (220) höchstens 30%, insbesondere höchstens 10% und besonders bevorzugt höchstens 3% der Rotorblatttiefe (C) an der bestimmten Position in Rotorblattlängsrichtung beträgt.

9. Rotorblatt (108) nach einem der vorstehenden Ansprüche, wobei die Rotorblattdicke (Th) pin dem Bereich der Gurney Flap (220) und der Splitterplatte (230) mindestens 16% der Rotorblatttiefe (C) beträgt.

10. Windenergieanlage (100) mit wenigstens einem Rotorblatt (108) nach einem der vorstehenden Ansprüche.

11. Windpark mit mehreren Windenergieanlagen (100) nach Anspruch 10.

12. Verfahren zum Auslegen eines Rotorblattes (108) einer Windenergieanlage (100) mit einer Rotorblattlänge (R), einer über die Rotorblattlänge (R) verlaufenden Rotorblatttiefe (C), einer über die Rotorblattlänge (R) verlaufenden Rotorblattdicke (Th) und einer über die Rotorblattlänge (R) verlaufenden Dicke (T) einer Hinterkante (208) des Rotorblattes,

wobei das Rotorblatt (108) in einem Bereich der Rotorblattlänge (R) gleichzeitig eine Splitterplatte (230) mit einer vorbestimmten Länge (L) und eine Gurney Flap (220) mit einer vorbestimmten Höhe (H) aufweist,
wobei ein Verhältnis aus Höhe (H) der Gurney Flap (220) zu Länge (L) der Splitterplatte (230) an einer bestimmten Position in Richtung der Rotorblattlänge (R) derart bestimmt wird, dass ein mit einer relativen Profildicke, die als Verhältnis von Rotorblattdicke (Th) zu Rotorblatttiefe (C) definiert ist, abnehmender Schwellwert unterschritten wird.

**Claims**

1. A rotor blade (108) of a wind turbine (100), having a rotor blade length (R), a rotor blade depth (C) extending over the rotor blade length (R), a rotor blade thickness (Th) extending over the rotor blade length (R), and a thickness (T) of a trailing edge (208) of the rotor blade extending over the rotor blade length (R),

wherein, in a region of the rotor blade length (R), the rotor blade (108) simultaneously has a splitter plate (230) that has a predetermined length (L) and a Gurney flap (220) that has a predetermined height (H), wherein a ratio of the height (H) of the Gurney flap (220) to the length (L) of the splitter plate (230) at a particular position in the direction of the rotor blade length (R) is selected in such a manner that a threshold value that decreases with a decreasing relative profile thickness, which is defined as a ratio of the rotor blade thickness (Th) to the rotor blade depth (C), is not reached.

2. The rotor blade (108) as claimed in claim 1, wherein the height (H) of the Gurney flap (220) is less than the length (L) of the splitter plate (230).

3. The rotor blade (108) as claimed in either one of the preceding claims, wherein a quantity ε is determined as a ratio of a de-dimensioned height (H/C) of the Gurney flap (220) and a de-dimensioned length (L/T) of the splitter plate (230), wherein
the height (H) of the Gurney flap (220) and the length (L) of the splitter plate (230) of the particular position in the direction of the rotor blade length (R) are selected in such a manner that a threshold value that decreases with a decreasing relative profile thickness, which is defined as a ratio of the rotor blade thickness (Th) to the rotor blade depth (C), is not reached.

4. The rotor blade (108) as claimed in claim 3, wherein the de-dimensioned height (H/C) of the Gurney flap (220) is a ratio of the height (H) of the Gurney flap (220) and the rotor blade depth (C), and/or the de-dimensioned length (L/T) of the splitter plate (230) is a ratio of the length (L) of the splitter plate (230) and the thickness (T) of the trailing edge (208).

5. The rotor blade (108) as claimed in claim 3 or 4, wherein the Gurney flap (220) and the splitter plate (230) are dimensioned in such a manner that the quantity ε over the region of the Gurney flap (220) and the splitter plate (230) in the longitudinal direction of the rotor blade is in a range of between 0 and a function of the relative thickness $\varepsilon_{limit}$ = $f$(relTh($r$)):

$$0 \leq \epsilon\big(\mathrm{relTh(r)}\big) \leq \epsilon_{\mathrm{limit}}\big(\mathrm{relTh(r)}\big).$$

6. The rotor blade (108) as claimed in claim 5, wherein the function of the relative thickness $\varepsilon_{limit}$ is defined as follows:

$$\epsilon_{\mathrm{limit}} = f\big(\mathrm{relTh(r)}\big) = \begin{cases} 0, \mathrm{relTh} < 0.16 \\ 0.881 \cdot \mathrm{relTh(r)} - 0.081, 0.16 \leq \mathrm{relTh(r)} \leq 1.00 \\ 0, \mathrm{relTh} > 1.00 \end{cases}.$$

7. The rotor blade (108) as claimed in any one of the preceding claims, wherein the length (L) of the splitter plate (230) is in a range of from 25% to 150% of the thickness (T) of the trailing edge (208) at the particular position in the longitudinal direction of the rotor blade.

8. The rotor blade (108) as claimed in any one of the preceding claims, wherein the height (H) of the Gurney flap (220) is at most 30%, in particular at most 10%, and especially preferably at most 3% of the rotor blade depth (C) at the particular position in the longitudinal direction of the rotor blade.

9. The rotor blade (108) as claimed in any one of the preceding claims, wherein the rotor blade thickness (Th) in the region of the Gurney flap (220) and the splitter plate (230) is at least 16% of the rotor blade depth (C).

10. A wind turbine (100) having at least one rotor blade (108) as claimed in any one of the preceding claims.

11. A wind farm having a plurality of wind turbines (100) as claimed in claim 10.

12. A method for designing a rotor blade (108) of a wind turbine (100), having a rotor blade length (R), a rotor blade depth (C) extending over the rotor blade length (R), a rotor blade thickness (Th) extending over the rotor blade length (R), and a thickness (T) of a trailing edge (208) of the rotor blade extending over the rotor blade length (R),

wherein, in a region of the rotor blade length (R), the rotor blade (108) simultaneously has a splitter plate (230) that has a predetermined length (L) and a Gurney flap (220) that has a predetermined height (H), wherein a ratio of the height (H) of the Gurney flap (220) to the length (L) of the splitter plate (230) at a particular position in the direction of the rotor blade length (R) is determined in such a manner that a threshold value that decreases with a relative profile thickness, which is defined as a ratio of rotor blade thickness (Th) to the rotor blade depth (C), is not reached.

**Revendications**

1. Pale de rotor (108) d'une éolienne (100) avec une longueur de pale de rotor (R), une profondeur de pale de rotor (C) s'étendant sur la longueur de pale de rotor (R), une épaisseur de pale de rotor (Th) s'étendant sur la longueur de pale de rotor (R) et une épaisseur (T) s'étendant sur la longueur de pale de rotor (R) d'un bord de fuite (208) de la pale de rotor,

   dans laquelle la pale de rotor (108) présente dans une zone de la longueur de pale de rotor (R) simultanément une plaque de déflexion (230) avec une longueur (L) prédéterminée et un volet de Gurney (220) avec une hauteur (H) prédéterminée,
   dans laquelle un rapport entre la hauteur (H) du volet de Gurney (220) et la longueur (L) de la plaque de déflexion (230) est choisi au niveau d'une position déterminée en direction de la longueur de pale de rotor (R) de telle manière qu'une valeur seuil décroissante avec une épaisseur de profil relative décroissante qui est définie comme rapport entre l'épaisseur de pale de rotor (Th) et la profondeur de pale de rotor (C) ne soit pas atteinte.

2. Pale de rotor (108) selon la revendication 1, dans laquelle la hauteur (H) du volet de Gurney (220) est inférieure à la longueur (L) de la plaque de déflexion (230).

3. Pale de rotor (108) selon l'une quelconque des revendications précédentes, dans laquelle une cote $\varepsilon$ est déterminée comme rapport entre une hauteur (H/C) non dimensionnée du volet de Gurney (220) et une longueur (L/T) non dimensionnée de la plaque de déflexion (230), dans laquelle
   la hauteur (H) du volet de Gurney (220) et la longueur (L) de la plaque de déflexion (230) de la position déterminée sont choisies en direction de la longueur de pale de rotor (R) de telle manière qu'une valeur seuil décroissante avec une épaisseur de profil relative décroissante qui est définie comme rapport entre l'épaisseur de pale de rotor (Th) et la profondeur de pale de rotor (C), ne soit pas atteinte.

4. Pale de rotor (108) selon la revendication 3, dans laquelle la hauteur (H/C) non dimensionnée du volet de Gurney (220) est un rapport entre la hauteur (H) du volet de Gurney (220) et la profondeur de pale de rotor (C) et/ou la longueur (L/T) non dimensionnée de la plaque de déflexion (230) est un rapport entre la longueur (L) de la plaque de déflexion (230) et l'épaisseur (T) du bord de fuite (208).

5. Pale de rotor (108) selon la revendication 3 ou 4, dans laquelle le volet de Gurney (220) et la plaque de déflexion (230) sont dimensionnés de telle manière que la cote $\varepsilon$ se trouve sur la zone du volet de Gurney (220) et la plaque de déflexion (230) dans le sens longitudinal de pale de rotor dans une plage entre 0 et une fonction de l'épaisseur relative $\varepsilon_{\text{limite}} = f(\text{relTh}(r))$ :

$$0 \leq \varepsilon(\text{relTh}(r)) \leq \varepsilon_{\text{limite}}(\text{relTh}(r)).$$

6. Pale de rotor (108) selon la revendication 5, dans laquelle la fonction de l'épaisseur relative $\varepsilon_{\text{limite}}$ est définie comme suit :

$$\varepsilon_{\text{limite}} = f(\text{relTh}(r)) = \begin{cases} 0, & \text{relTh} < 0.16 \\ 0.881 \cdot \text{relTh}(r) - 0.081, & 0.16 \leq \text{relTh}(r) \leq 1.00 \\ 0, & \text{relTh} > 1.00 \end{cases}.$$

7. Pale de rotor (108) selon l'une quelconque des revendications précédentes, dans laquelle la longueur (L) de la plaque de déflexion (230) se trouve dans une plage de 25 % à 150 % de l'épaisseur (T) du bord de fuite (208) au niveau de la position déterminée dans le sens longitudinal de pale de rotor.

8. Pale de rotor (108) selon l'une quelconque des revendications précédentes, dans laquelle la hauteur (H) du volet de Gurney (220) s'élève au plus à 30 %, en particulier au plus à 10 % et de manière particulièrement préférée au plus à 3 % de la profondeur de pale de rotor (C) au niveau de la position déterminée dans le sens longitudinal de pale de rotor.

9. Pale de rotor (108) selon l'une quelconque des revendications précédentes, dans laquelle l'épaisseur de pale de rotor (Th) dans la zone du volet de Gurney (220) et la plaque de déflexion (230) s'élève à au moins 16 % de la profondeur de pale de rotor (C).

10. Eolienne (100) avec au moins une pale de rotor (108) selon l'une quelconque des revendications précédentes.

11. Parc éolien avec plusieurs éoliennes (100) selon la revendication 10.

12. Procédé de conception d'une pale de rotor (108) d'une éolienne (100) avec une longueur de pale de rotor (R), une profondeur de pale de rotor (C) s'étendant sur la longueur de pale de rotor (R), une épaisseur de pale de rotor (Th) s'étendant sur la longueur de pale de rotor (R) et une épaisseur (T) s'étendant sur la longueur de pale de rotor (R) d'un bord de fuite (208) de la pale de rotor,

dans lequel la pale de rotor (108) présente dans une zone de la longueur de pale de rotor (R) simultanément une plaque de déflexion (230) avec une longueur (L) prédéterminée et un volet de Gurney (220) avec une hauteur (H) prédéterminée,
dans lequel un rapport entre la hauteur (H) du volet de Gurney (220) et la longueur (L) de la plaque de déflexion (230) est déterminé au niveau d'une position déterminée en direction de la longueur de pale de rotor (R) de telle manière qu'une valeur seuil décroissante avec une épaisseur de profil relative qui est définie comme rapport entre l'épaisseur de pale de rotor (Th) et la profondeur de pale de rotor (C), ne soit pas atteinte.

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011012965 A1
- DE 102018103678 A1
- DE 202016101461 U1
- US 20100047070 A1
- US 20190024631 A1
- US 5265830 A

- EP 2806156 A1
- WO 2016055076 A1
- US 2019032631 A1
- US 2015176563 A1
- EP 2366891 A1